# FASCICULE DE BREVET EUROPEEN

(11) **EP 3 521 692 B1**
(45) Date de publication et mention de la délivrance du brevet: **20.07.2022**
(21) Numéro de dépôt: 19154321.4
(22) Date de dépôt: 29.01.2019
(51) Int. Cl.: F21S 41/147, F21S 41/365

(54) **MODULE LUMINEUX BI-FONCTION AVEC SURFACE ECLAIRÉE COMMUNE**
BIFUNKTIONS-LEUCHTMODUL MIT GEMEINSAMER BELEUCHTETER FLÄCHE
DUAL-FUNCTION LIGHT MODULE WITH COMMON LIT SURFACE

(30) Priorité: 31.01.2018 FR 1850804
(43) Date de publication de la demande: 07.08.2019
(73) Titulaire: Valeo Vision, 93012 Bobigny Cedex (FR)
(72) Inventeur: LAMINETTE, Maxime, 49000 ANGERS (FR); DOHA, Jean-François, 49000 ANGERS (FR); GIRAUD, Sylvain, 49000 ANGERS (FR); FLOCH, Lionel, SEYMOUR, 47274 (US)
(74) Mandataire: Valeo Visibility

(56) Documents cités:
- EP-A1- 1 528 312
- EP-A1- 2 366 938
- EP-B1- 1 528 312

## Description

L'invention a trait au domaine de l'éclairage et de la signalisation lumineuse, notamment pour les véhicules automobiles.

Le document de brevet publié FR 2 849 158 A1 divulgue un module d'éclairage pour projecteur de véhicule, comprenant essentiellement une première surface réfléchissante de type elliptique avec un premier et un deuxième foyer, et une deuxième surface réfléchissante de type parabolique avec un foyer correspondant au deuxième foyer de la première surface réfléchissante. Les rayons lumineux émis par une source lumineuse située au premier foyer de la première surface réfléchissante sont réfléchis vers la deuxième surface réfléchissante en passant par le deuxième foyer. Ces rayons sont alors réfléchis suivant une même direction par cette deuxième surface réfléchissante de type parabolique. Le module comprend par ailleurs une surface réfléchissante généralement plane avec un bord de coupure passant par le deuxième foyer. Les rayons lumineux rencontrant cette surface à proximité du deuxième foyer sont alors réfléchis vers la deuxième surface réfléchissante suivant des angles d'incidence tels que ces rayons sont réfléchis vers le bas du faisceau lumineux. Ce faisceau présente ainsi une coupure générée par le bord de coupure et la surface réfléchissante adjacente audit bord.

Ce type de module lumineux est intéressant en ce qu'il permet de réaliser une fonction lumineuse sans que la source lumineuse soit visible depuis l'extérieur du module, car c'est en effet seulement la deuxième surface réfléchissante qui est visible depuis l'extérieur. Ce module ne permet cependant pas d'assurer plusieurs fonctions.

Le document EP 1 528 312 A1 décrit un module lumineux selon le préambule de la revendication 1. L'invention a pour objectif de pallier au moins un inconvénient de l'état de la technique susmentionné. Plus particulièrement, l'invention a pour objectif de proposer un module lumineux assurant plusieurs fonctions et présentant un même aspect dans chacune des fonctions.

L'invention a pour objet un module lumineux, notamment pour véhicule automobile, suivant la revendication 1. En particulier, le module lumineux selon l'invention comprend une première surface réfléchissante, de type elliptique avec un premier foyer et un deuxième foyer ; une deuxième surface réfléchissante, de type parabolique avec un foyer correspondant au deuxième foyer de la première surface réfléchissante ; des rayons lumineux émis par une première source lumineuse située au premier foyer de la première surface réfléchissante étant réfléchis par les première et deuxième surfaces réfléchissantes pour former un premier faisceau lumineux ; remarquable en ce que le module comprend, en outre, une troisième surface réfléchissante adjacente au deuxième foyer de la première surface réfléchissante et configurée pour réfléchir, vers la deuxième surface réfléchissante, des rayons lumineux émis par une deuxième source lumineuse, en vue de former un deuxième faisceau lumineux.

L'expression « type elliptique » s'applique de manière générale à des réflecteurs dont la surface présente deux foyers, c'est-à-dire deux zones de convergence des rayons lumineux telles que les rayons lumineux émis par une source lumineuse placée au niveau d'une des deux zones de convergence convergent, après réflexion sur la surface, vers l'autre zone de convergence. Ces deux foyers sont situés à proximité de ladite surface, c'est-à-dire à l'intérieur d'un volume de dimensions inférieures à 10 fois, et notamment à 5 fois, les dimensions du réflecteur. Une surface de type elliptique peut donc présenter ou non des portions elliptiques. Un réflecteur présentant une telle surface est généralement associé, pour créer un faisceau lumineux, à une optique de projection, comme par exemple une lentille ou un réflecteur de type parabolique.

L'expression « type parabolique » s'applique de manière générale à des réflecteurs dont la surface présente un seul foyer, c'est-à-dire une zone de convergence des rayons lumineux telle que les rayons lumineux émis par une source lumineuse placée au niveau de cette zone de convergence sont projetés à grande distance après réflexion sur la surface. Projeté à grande distance signifie que ces rayons lumineux ne convergent pas vers une zone située à moins 10 fois les dimensions du réflecteur. Autrement dit les rayons réfléchis ne convergent pas vers une zone de convergence ou, s'ils convergent, cette zone de convergence est située à une distance supérieure ou égale à 10 fois les dimensions du réflecteur. Une surface de type parabolique peut donc présenter ou non des portions paraboliques. Un réflecteur présentant une telle surface est généralement utilisé seul pour créer un faisceau lumineux. Alternativement il peut être utilisé comme surface de projection associée à un réflecteur de type elliptique. Dans ce cas la source lumineuse du réflecteur de type parabolique est la zone de convergence des rayons réfléchis par le réflecteur de type elliptique.

Selon l'invention, le module comprend un système optique configuré pour faire converger vers la troisième surface réfléchissante les rayons lumineux émis par la deuxième source lumineuse.

Selon l'invention, le système optique comprend une quatrième surface réfléchissante, de type elliptique avec un premier foyer auquel la deuxième source lumineuse est destinée à être placée, et un deuxième foyer.

Selon un mode avantageux de l'invention, le deuxième foyer de la quatrième surface réfléchissante est situé derrière la troisième surface réfléchissante.

Selon l'invention, les première et quatrième surfaces réfléchissantes forment, chacune, une demi-coquille délimitée par un plan sur lequel l'une des première et deuxième sources lumineuses, respectivement, est destinée à être disposée.

Selon l'invention, les deux plans délimitant les première et quatrième surfaces réfléchissantes forment un angle α supérieur à 68° et inférieur à 98°.

Selon un mode avantageux de l'invention, la deuxième surface réfléchissante est supportée par la quatrième surface réfléchissante. Plus particulièrement, la deuxième surface réfléchissante est formée par un réflecteur rigidement lié à un réflecteur formant la quatrième surface réfléchissante.

Selon un mode avantageux de l'invention, ledit module comprend un bord de coupure au deuxième foyer de la première surface réfléchissante.

Selon un mode avantageux de l'invention, le bord de coupure et la troisième surface réfléchissante sont formés sur un support commun.

Selon un mode avantageux de l'invention, le support commun du bord de coupure et de la troisième surface réfléchissante est allongé suivant le bord de coupure et présente une section transversale biseautée.

Selon un mode avantageux de l'invention, les premier et deuxième faisceaux lumineux ont une direction commune.

Selon un mode avantageux de l'invention, les premier et deuxième faisceaux lumineux présentent chacun un maximum d'intensité, l'écart angulaire entre les deux maxima étant inférieur ou égal à 3°, et préférentiellement inférieur ou égal à 2°.

Selon un mode avantageux de l'invention, la troisième surface réfléchissante s'étend suivant une direction longitudinale transversale aux premier et deuxième faisceaux lumineux, la section transversale de ladite surface présentant un profil droit, concave ou convexe.

Selon un mode avantageux de l'invention, la troisième surface réfléchissante présente un profil longitudinal droit, concave ou convexe.

Selon un mode avantageux de l'invention, le premier faisceau lumineux est un faisceau d'éclairage automobile à coupure du type code, et/ou le deuxième faisceau lumineux, combiné avec le premier faisceau, est un faisceau d'éclairage automobile du type route.

L'invention a également pour objet un dispositif d'éclairage et/ou de signalisation lumineuse, notamment pour véhicule automobile, comprenant au moins un module d'éclairage ; remarquable en ce que le module ou au moins un des modules d'éclairage est conforme à l'invention.

Les mesures de l'invention sont intéressantes en ce qu'elles permettent de réaliser un module lumineux bi-fonction avec une surface éclairée visible depuis l'extérieur qui présente un même aspect éclairé dans les deux fonctions lumineuses. Il est particulièrement bien adapté pour assurer des fonctions d'éclairage du type « code » et « route ». Il est cependant également envisageable d'assurer d'autres fonctions, notamment des fonctions de signalisation lumineuse, comme par exemple des fonctions de signalisation de jour ou DRL (acronyme de « Daytime Running Light ») et d'indicateur de direction (plus couramment désignée « clignotant »).

D'autres caractéristiques et avantages de la présente invention seront mieux compris à l'aide de la description et des dessins parmi lesquels :
- La figure 1 est une représentation en perspective d'un module lumineux selon l'invention ;
- La figure 2 est une vue en coupe du module lumineux de la figure 2 ;
- La figure 3 est une vue en coupe du module lumineux de la figure 1 illustrant les rayons formant un premier faisceau lumineux ;
- La figure 4 est une vue en coupe du module lumineux de la figure 1 illustrant les rayons formant un deuxième faisceau lumineux ;
- La figure 5 est une vue en coupe du module lumineux de la figure 1 illustrant les rayons formant les premier et deuxième faisceaux lumineux ;
- La figure 6 est une représentation de quatre modules lumineux formant un dispositif lumineux, deux desdits modules étant conformes à l'invention.

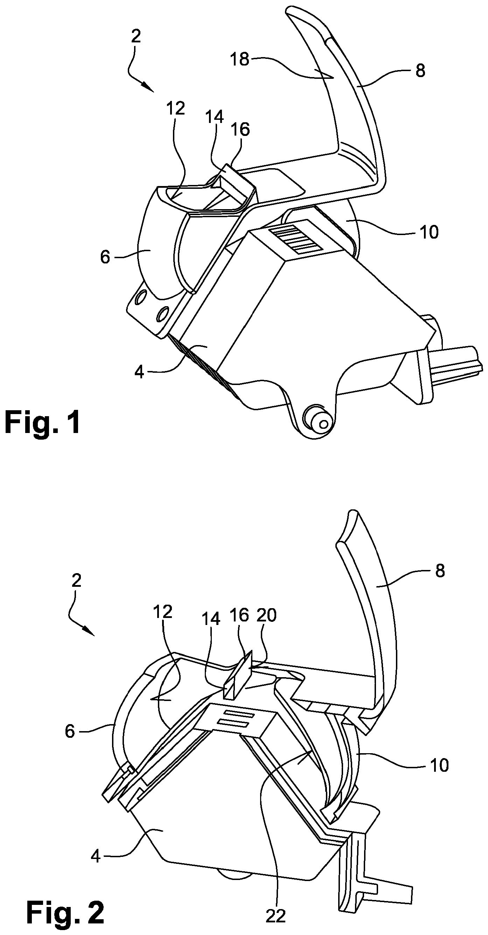

La figure 1 illustre en perspective un module lumineux conforme à l'invention. Le module lumineux 2 comprend, essentiellement, un support 4, un premier réflecteur 6, un deuxième réflecteur 8 et un troisième réflecteur 10.

Le premier réflecteur 6 forme une première surface réfléchissante 12 de type elliptique. Plus particulièrement, cette surface réfléchissante 12 forme une calotte de type elliptique. Le premier réflecteur 6 peut également comprendre des parois latérales s'étendant jusqu'à un support transversal 14 comprenant un bord de coupure 16. Plus précisément, le bord de coupure 16 en question est situé au niveau du deuxième foyer de la première surface de réfléchissante 12.

Le deuxième réflecteur 8 forme une deuxième surface réfléchissante 18. Celle-ci forme avantageusement une calotte de type parabolique avec un foyer confondu avec le deuxième foyer de la première surface réfléchissante 12.

Le troisième réflecteur 10, situé sous le deuxième réflecteur 8, forme similairement au premier réflecteur 6 une surface réfléchissante de type elliptique.

La figure 2 est une vue en coupe du module lumineux de la figure 2 suivant une autre perspective, la coupe étant médiane aux trois réflecteurs du module. On peut observer que le support transversal 14 comprenant le bord de coupure 16 forme également une troisième surface réfléchissante 20 destinée à réfléchir vers le deuxième réflecteur 8 les rayons lumineux émis par une source lumineuse et réfléchis par la surface réfléchissante 22 du troisième réflecteur, cette surface réfléchissante 22 formant alors une quatrième surface réfléchissante du module lumineux.

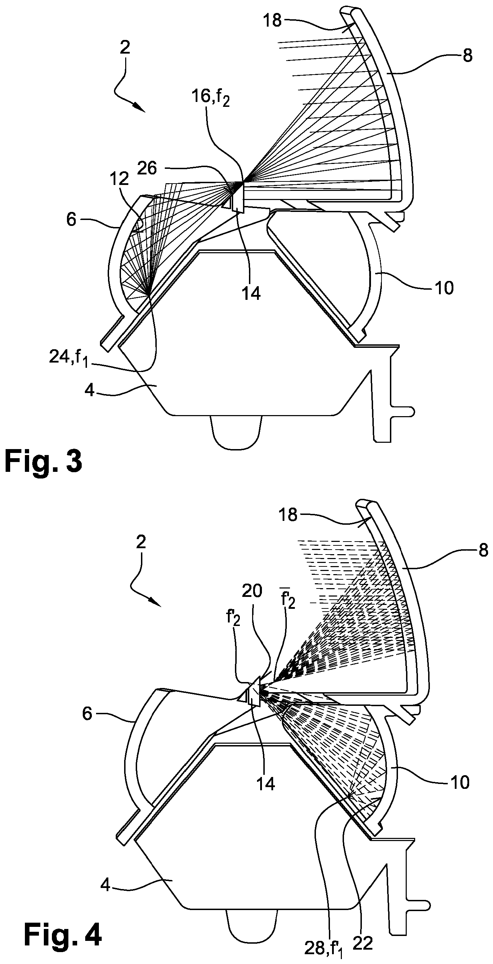

La figure 3 est une vue en coupe et en plan du module lumineux des figures 1 et 2, illustrant le parcours des rayons réfléchis par les premier et deuxième réflecteurs. Une première source lumineuse 24 est représentée schématiquement par un point au niveau du premier foyer f₁ de la première surface réfléchissante 12 sur le premier réflecteur 8, étant entendu que cette source lumineuse n'est pas nécessairement ponctuelle et peut donc présenter une certaine étendue. Comme cela est visible à la figure 3, les rayons émis par la première source lumineuse 24 sont réfléchis par la première surface réfléchissante 12 vers la deuxième surface réfléchissante 18 en passant par le deuxième foyer f₂, au niveau de bord de coupure 16 sur le support transversal. Ces rayons sont alors réfléchis par la deuxième surface réfléchissante 18 suivant une même direction pour former un premier faisceau lumineux.

La présence du bord de coupure 16 a pour effet que le faisceau lumineux produit, en l'occurrence le premier faisceau lumineux, présente une coupure dont le profil correspond à celui dudit bord. En effet, parmi les rayons lumineux émis par la source lumineuse 24 et réfléchis par la surface réfléchissante 12, ceux qui rencontrent l'élément transversal 14 au niveau de sa surface 26 sont absorbés ou réfléchis lorsque cette surface est réfléchissante. En d'autres termes, ces rayons, en l'absence du bord de coupure 16, seraient transmis jusqu'à la deuxième surface réfléchissante 18 suivant un angle d'incidence plus grand et seraient alors réfléchis vers le haut du faisceau lumineux. Il est à noter que le principe d'un bord de coupure est, de manière générale, connu de l'homme de métier.

Il est à noter que la présence du bord de coupure 16 est optionnelle. En effet, il est envisageable que le premier faisceau lumineux ne présente pas de coupure.

La figure 4 est une vue en coupe et en plan du module lumineux des figures 1 et 2, similaire à la figure 3 mais illustrant le parcours des rayons réfléchis par le troisième et le deuxième réflecteur. Une deuxième source lumineuse 28 est représentée schématiquement par un point au niveau du premier foyer f'₁ de la quatrième surface réfléchissante 22 sur le troisième réflecteur 10, étant entendu que cette source lumineuse n'est pas nécessairement ponctuelle et peut donc présenter une certaine étendue. Comme cela est visible à la figure 4, les rayons émis par la deuxième source lumineuse 28 sont réfléchis par la quatrième surface réfléchissante 22 vers la troisième surface réfléchissante 20. Plus précisément, ces rayons convergent vers le deuxième foyer f'₂ de la quatrième surface réfléchissante 22, ce foyer étant en l'occurrence toutefois disposé derrière la troisième surface réfléchissante 20, c'est-à-dire situé du coté opposé de la troisième surface réfléchissante par rapport au premier foyer f'₁ de la quatrième surface réfléchissante. Ces rayons sont alors réfléchis par cette surface vers la deuxième surface réfléchissante 18 en passant par un point f̅'̅₂ correspondant au conjugué du deuxième foyer f'₂ par rapport à la troisième surface réfléchissante 20. Ces rayons sont ensuite transmis jusqu'à la deuxième surface réfléchissante 18 pour y être réfléchis et former un deuxième faisceau lumineux.

Il est à noter que la troisième surface réfléchissante 20 est avantageusement plane, comme cela est illustré aux figures. Cependant, cette surface peut présenter un profil concave ou convexe. Cette surface s'étend avantageusement suivant une direction longitudinale qui est transversale aux directions des premier et deuxième faisceaux d'éclairage. La section transversale de la surface en question peut être constante le long de cette direction longitudinale ou présenter des variations. La convexité ou concavité peut ainsi être présente dans une section transversale et/ou dans une section longitudinale de la surface en question.

Il est aussi à noter que la configuration de la troisième surface réfléchissante 20 peut dépendre de la configuration du faisceau lumineux incident. A cet effet, il est envisageable d'utiliser un système optique autre que celui du troisième réflecteur 10 de type elliptique.

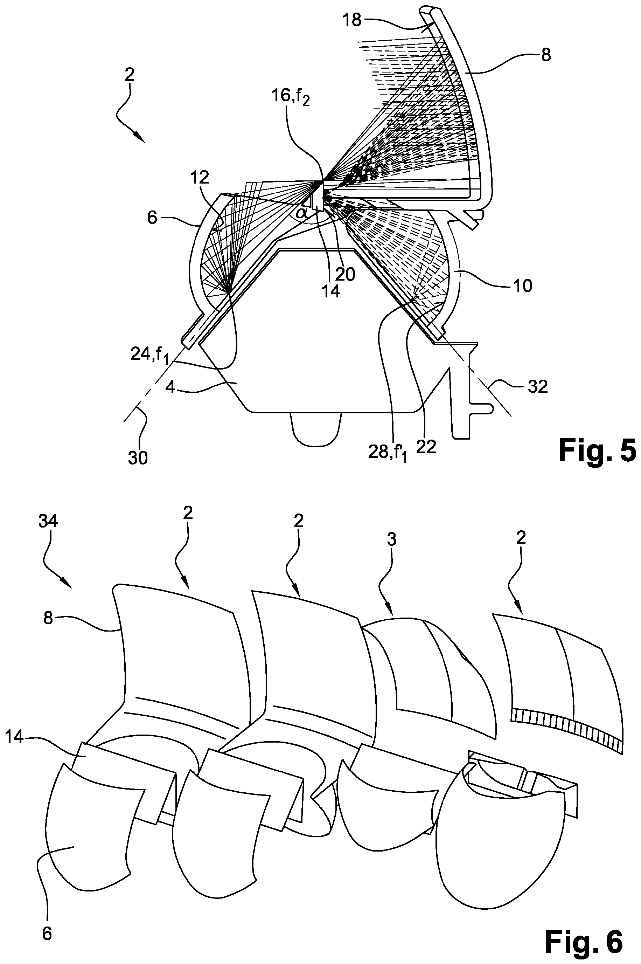

La figure 5 est une est une vue en coupe et en plan du module lumineux des figures 1 et 2, similaire aux figures 3 et 4 mais illustrant le parcours des rayons émis par les première et deuxième sources lumineuse. En d'autres termes, la figure 5 est une combinaison des figures 3 et 4. On peut observer la superposition ou combinaison des premier et deuxième faisceaux lumineux lorsque les première et deuxième sources lumineuses sont allumées de manière concomitante. Plus spécifiquement, on peut observer, en l'occurrence, que les rayons émis par la deuxième source lumineuse 28 sont réfléchis par la troisième surface réfléchissante 20 de manière à présenter des angles d'incidence plus importants que ceux des rayons provenant de la première source lumineuse 24. Ils vont ainsi être réfléchis davantage vers le haut du faisceau lumineux produit.

Toujours en référence à la figure 5, il est intéressant de noter l'angle α formé par les plans 30 et 32 correspondant aux axes optiques respectifs des premier et deuxième réflecteurs. L'angle α est supérieur à 68° et inférieur à 98°, plus avantageusement supérieur à 73° et inférieur à 83°, encore plus avantageusement de l'ordre de 78°. Cet angle peut notamment dépendre de la définition de la deuxième surface réfléchissante de type parabolique 18.

Le premier faisceau lumineux provenant de la première source lumineuse 24 est avantageusement un faisceau d'éclairage automobile à coupure, couramment appelé «code» (en anglais communément appelé «low beam »). Le deuxième faisceau lumineux provenant de la deuxième source lumineuse 28 est avantageusement un faisceau d'éclairage automobile venant compléter le premier faisceau pour former un faisceau d'éclairage automobile couramment appelé « route » (en anglais, « high beam »).

Lorsque le premier faisceau est actif et également lorsque le deuxième faisceau est actif, en combinaison avec le premier ou seul, la deuxième surface réfléchissante 18 est allumée. Cela signifie que l'aspect éclairé du module, visible depuis l'extérieur, est essentiellement le même indépendamment de la fonction qui est active.

La figure 6 illustre de manière un peu schématique un dispositif lumineux 34, en l'occurrence un projecteur automobile constitué de quatre modules lumineux dont deux sont des modules bi-fonction 2 conformes à celui des figures 1 à 5, et deux autres sont des modules mono-fonction 3. A titre d'exemple, une première fonction d'éclairage du type « code » est assurée lorsque les quatre modules sont allumés et une deuxième fonction d'éclairage du type « route » est assurée lorsque, en plus, les deuxièmes sources lumineuses des modules 2 sont allumées.

## Revendications

1. Module lumineux (2), notamment pour véhicule automobile, comprenant :
- une première surface réfléchissante (12), de type elliptique avec un premier foyer (f₁) et un deuxième foyer (f₂) ;
- une deuxième surface réfléchissante (18), de type parabolique avec un foyer correspondant au deuxième foyer (f₂) de la première surface réfléchissante (12) ;
des rayons lumineux émis par une première source lumineuse (24) située au premier foyer (f₁) de la première surface réfléchissante (12) étant réfléchis par les première et deuxième surfaces réfléchissantes (12, 18) pour former un premier faisceau lumineux ;
le module (2) comprenant, en outre :
- une troisième surface réfléchissante (20) adjacente au deuxième foyer (f₂) de la première surface réfléchissante (12) et configurée pour réfléchir, vers la deuxième surface réfléchissante (18), des rayons lumineux émis par une deuxième source lumineuse (28), en vue de former un deuxième faisceau lumineux
**caractérisé en ce que** :
- ledit module comprend un système optique (10) configuré pour faire converger vers la troisième surface réfléchissante (20) les rayons lumineux émis par la deuxième source lumineuse (28) ;
- le système optique (10) comprend une quatrième surface réfléchissante (22), de type elliptique avec un premier foyer (f'₁) auquel la deuxième source lumineuse (28) est destinée à être placée, et un deuxième foyer (f'₂) ;
- les première et quatrième surfaces réfléchissantes (12, 22) forment, chacune, une demi-coquille délimitée par un plan (30, 32) sur lequel l'une des première et deuxième sources lumineuses (24, 28), respectivement, est destinée à être disposée ; et
- les deux plans (30, 32) délimitant les première et quatrième surfaces réfléchissantes (12, 22) forment un angle α supérieur à 68° et inférieur à 98°.

2. Module lumineux (2) selon la revendication 1, **caractérisé en ce que** le deuxième foyer (f'₂) de la quatrième surface réfléchissante (22) est situé derrière la troisième surface réfléchissante (20).

3. Module lumineux (2) selon l'une des revendications 1 et 2, **caractérisé en ce que** la deuxième surface réfléchissante (18) est supportée par la quatrième surface réfléchissante (22).

4. Module lumineux (2) selon l'une des revendications 1 à 3, **caractérisé en ce que** ledit module comprend un bord de coupure (16) au deuxième foyer (f₂) de la première surface réfléchissante (12).

5. Module lumineux (2) selon la revendication 4, **caractérisé en ce que** le bord de coupure (16) et la troisième surface réfléchissante (20) sont formés sur un support commun (14).

6. Module lumineux (2) selon la revendication 5, **caractérisé en ce que** le support commun (14) du bord de coupure (16) et de la troisième surface réfléchissante (20) est allongé suivant ledit bord et présente une section transversale biseautée.

7. Module lumineux (2) selon l'une des revendications 1 à 6, **caractérisé en ce que** les premier et deuxième faisceaux lumineux ont une direction commune.

8. Module lumineux (2) selon l'une des revendications 1 à 7, **caractérisé en ce que** la troisième surface réfléchissante (20) s'étend suivant une direction longitudinale transversale aux premier et deuxième faisceaux lumineux, la section transversale de ladite surface présentant un profil droit, concave ou convexe.

9. Module lumineux (2) selon la revendication 8, **caractérisé en ce que** la troisième surface réfléchissante (20) présente un profil longitudinal droit, concave ou convexe.

10. Module lumineux (2) selon l'une des revendications 1 à 9, **caractérisé en ce que** le premier faisceau lumineux est un faisceau d'éclairage automobile à coupure du type code, et/ou le deuxième faisceau lumineux, combiné avec le premier faisceau, est un faisceau d'éclairage automobile du type route.

11. Dispositif d'éclairage et/ou de signalisation lumineuse (34), notamment pour véhicule automobile, comprenant au moins un module d'éclairage (2, 3) ; **caractérisé en ce que** le module ou au moins un (2) des modules d'éclairage (2, 3) est conforme à l'une des revendications 1 à 10.

## Patentansprüche

1. Leuchtmodul (2), insbesondere für ein Kraftfahrzeug, umfassend:
- eine ellipsenartige erste reflektierende Fläche (12) mit einem ersten Brennpunkt (f₁) und einem zweiten Brennpunkt (f₂) ;
- eine parabolische zweite reflektierende Fläche (18) mit einem Brennpunkt, der dem zweiten Brennpunkt (f₂) der ersten reflektierenden Fläche (12) entspricht;
wobei Lichtstrahlen, die von einer ersten Lichtquelle (24) emittiert werden, die sich am ersten Brennpunkt (f₁) der ersten reflektierenden Fläche (12) befindet, von der ersten und zweiten reflektierenden Fläche (12, 18) reflektiert werden, um ein erstes Lichtbündel zu bilden; wobei das Modul (2) ferner Folgendes umfasst:
- eine dritte reflektierende Fläche (20), die dem zweiten Brennpunkt (f₂) der ersten reflektierenden Fläche (12) benachbart ist und dazu ausgebildet ist, Lichtstrahlen, die von einer zweiten Lichtquelle (28) emittiert werden, zur zweiten reflektierenden Fläche (18) zu reflektieren, um ein zweites Lichtbündel zu bilden **dadurch gekennzeichnet, dass**:
- das Modul ein Optiksystem (10) umfasst, das dazu ausgebildet ist, die Lichtstrahlen, die von der zweiten Lichtquelle (28) emittiert werden, zur dritten reflektierenden Fläche (20) zusammenlaufen zu lassen;
- das Optiksystem (10) eine ellipsenartige vierte reflektierende Fläche (22) mit einem ersten Brennpunkt (f'₁), an dem die zweite Lichtquelle (28) platziert sein soll, und einem zweiten Brennpunkt (f'₂) umfasst;
- die erste und vierte reflektierende Fläche (12, 22) jeweils eine Halbschale bilden, die von einer Ebene (30, 32) begrenzt ist, auf der eine von der ersten beziehungsweise zweiten Lichtquelle (24, 28) angeordnet sein soll; und
- die zwei Ebenen (30, 32), die die erste und vierte reflektierende Fläche (12, 22) bilden, einen Winkel α größer als 68° und kleiner als 98° bilden.

2. Leuchtmodul (2) nach Anspruch 1, **dadurch gekennzeichnet, dass** sich der zweite Brennpunkt (f'₂) der vierten reflektierenden Fläche (22) hinter der dritten reflektierenden Fläche (20) befindet.

3. Leuchtmodul (2) nach einem der Ansprüche 1 und 2, **dadurch gekennzeichnet, dass** die zweite reflektierende Fläche (18) von der vierten reflektierenden Fläche (22) getragen wird.

4. Leuchtmodul (2) nach einem der Ansprüche 1 bis 3, **dadurch gekennzeichnet, dass** das Modul eine Abgrenzungskante (16) am zweiten Brennpunkt (f₂) der ersten reflektierenden Fläche (12) umfasst.

5. Leuchtmodul (2) nach Anspruch 4, **dadurch gekennzeichnet, dass** die Abgrenzungskante (16) und die dritte reflektierende Fläche (20) auf einem gemeinsamen Träger (14) ausgebildet sind.

6. Leuchtmodul (2) nach Anspruch 5, **dadurch gekennzeichnet, dass** der gemeinsame Träger (14) der Abgrenzungskante (16) und der dritten reflektierenden Fläche (20) gemäß der Kante langgestreckt ist und einen schrägen Querschnitt aufweist.

7. Leuchtmodul (2) nach einem der Ansprüche 1 bis 6, **dadurch gekennzeichnet, dass** das erste und zweite Lichtbündel eine gemeinsame Richtung aufweisen.

8. Leuchtmodul (2) nach einem der Ansprüche 1 bis 7, **dadurch gekennzeichnet, dass** sich die dritte reflektierende Fläche (20) in einer Längsrichtung quer zum ersten und zweiten Lichtbündel erstreckt, wobei der Querschnitt der Fläche ein gerades, konkaves oder konvexes Profil aufweist.

9. Leuchtmodul (2) nach Anspruch 8, **dadurch gekennzeichnet, dass** die dritte reflektierende Fläche (20) ein gerades, konkaves oder konvexes Längsprofil aufweist.

10. Leuchtmodul (2) nach einem der Ansprüche 1 bis 9, **dadurch gekennzeichnet, dass** das erste Lichtbündel ein Kraftfahrzeugbeleuchtungsbündel mit Abgrenzung vom Typ Abblendlicht und/oder das zweite Lichtbündel mit dem ersten Bündel kombiniert ein Kraftfahrzeugbeleuchtungsbündel vom Typ Fernlicht ist.

11. Beleuchtungs- und/oder Signalisierungsvorrichtung (34), insbesondere für ein Kraftfahrzeug, umfassend wenigstens ein Beleuchtungsmodul (2, 3); **dadurch gekennzeichnet, dass** das Modul oder wenigstens eins (2) der Beleuchtungsmodule (2, 3) einem der Ansprüche 1 bis 10 entspricht.

## Claims

1. Light module (2), notably for a motor vehicle, comprising:
- a first reflective surface (12), of elliptical type, with a first focal point (f₁) and a second focal point (f₂) ;
- a second reflective surface (18), of parabolic type, with a focal point corresponding to the second focal point (f₂) of the first reflective surface (12);
rays of light emitted by a first light source (24) situated at the first focal point (f₁) of the first reflective surface (12) being reflected by the first and second reflective surfaces (12, 18) to form a first beam of light;
the module (2) further comprising:
- a third reflective surface (20) adjacent to the second focal point (f₂) of the first reflective surface (12) and configured to reflect, towards the second reflective surface (18), rays of light emitted by a second light source (28) so as to form a second beam of light
**characterized in that**:
- said module comprises an optical system (10) configured to cause the rays of light emitted by the second light source (28) to converge towards the third reflective surface (20);
- the optical system (10) comprises a fourth reflective surface (22), of elliptical type, with a first focal point (f'₁) at which the second light source (28) is intended to be placed, and a second focal point (f'₂);
- the first and fourth reflective surfaces (12, 22) each form a half-shell delimited by a plane (30, 32) on which a respective one of the first and second light sources (24, 28) is intended to be positioned; and
- the two planes (30, 32) delimiting the first and fourth reflective surfaces (12, 22) form an angle α greater than 68° and less than 98°.

2. Light module (2) according to Claim 1, **characterized in that** the second focal point (f'₂) of the fourth reflective surface (22) is situated behind the third reflective surface (20).

3. Light module (2) according to one of Claims 1 and 2, **characterized in that** the second reflective surface (18) is supported by the fourth reflective surface (22).

4. Light module (2) according to one of Claims 1 to 3, **characterized in that** said module comprises a cut off edge (16) at the second focal point (f₂) of the first reflective surface (12).

5. Light module (2) according to Claim 4, **characterized in that** the cut-off edge (16) and the third reflective surface (20) are formed on a common support (14).

6. Light module (2) according to Claim 5, **characterized in that** the common support (14) of the cut off edge (16) and of the third reflective surface (20) is elongate along said edge and has a chamfered cross section.

7. Light module (2) according to one of Claims 1 to 6, **characterized in that** the first and second beams of light have a common direction.

8. Light module (2) according to one of Claims 1 to 7, **characterized in that** the third reflective surface (20) extends in a longitudinal direction that is transverse to the first and second beams of light, the cross section of said surface having a straight, concave or convex longitudinal profile.

9. Light module (2) according to Claim 8, **characterized in that** the third reflective surface (20) presents a straight, concave or convex longitudinal profile.

10. Light module (2) according to one of Claims 1 to 9, **characterized in that** the first beam of light is a motor vehicle lighting beam with a cut-off of the low-beam type, and/or the second beam of light, combined with the first beam, is a motor vehicle lighting beam of the high-beam type.

11. Lighting and/or light-signalling device (34), notably for a motor vehicle, comprising at least one light module (2, 3); **characterized in that** the module or at least one (2) of the light modules (2, 3) is in accordance with one of Claims 1 to 10.
